# EUROPÄISCHE PATENTANMELDUNG

(11) **EP 2 522 870 A1**
(43) Veröffentlichungstag der Anmeldung: **14.11.2012**
(21) Anmeldenummer: 12165619.3
(22) Anmeldetag: 26.04.2012
(51) Int. Cl.: F16C 39/02, F16C 19/52, F16C 32/04

(54) **Fanglager**

(30) Priorität: 12.05.2011 DE 102011075768
(71) Anmelder: Schaeffler Technologies AG & Co. KG, 91074 Herzogenaurach (DE)
(72) Erfinder: Pausch, Michael, 97456 Dittelbrunn (DE)

(57) **Zusammenfassung**

Ein Fanglager (4) einer Lageranordnung (1) mit Magnetlager (2) weist ein als Wälzlager ausgebildetes Radial-Fanglager (5) und ein als Gleitlager ausgebildetes Axial-Fanglager (6) auf.

## Beschreibung

### Gebiet der Erfindung

Die Erfindung betrifft ein für die Verwendung in einer Lageranordnung mit Magnetlagerung vorgesehenes Fanglager nach dem Oberbegriff des Anspruchs 1.

### Hintergrund der Erfindung

Ein Fanglager ist beispielsweise aus der DE 10 2009 022 835 B3 bekannt. Das Fanglager hat den Zweck, eine magnetgelagerte Rotorwelle einer Maschine bei Ausfall des Magnetlagers aufzufangen.

### Aufgabe der Erfindung

Der Erfindung liegt die Aufgabe zugrunde, ein Fanglager gegenüber dem Stand der Technik insbesondere hinsichtlich des Verhältnisses zwischen Leistung, Haltbarkeit und Herstellungsaufwand weiterzuentwickeln.

### Zusammenfassung der Erfindung

Diese Aufgabe wird erfindungsgemäß gelöst durch ein Fanglager mit den Merkmalen des Anspruchs 1.

Das Fanglager dient als Sicherheitseinrichtung der zumindest kurzfristigen Lagerung eines rotierenden Maschinenteils, insbesondere einer Welle, bei Ausfall eines ansonsten zur Lagerung des Maschinenteils vorgesehenen Magnetlagers und setzt sich aus einem als Wälzlager ausgebildeten Radial-Fanglager und einem als Gleitlager ausgebildeten Axial-Fanglager zusammen.

Unter dem Begriff "Radial-Fanglager" wird ein Fanglager verstanden, welches aussschließlich oder zumindest überwiegend zur Aufnahme radialer Kräfte vorgesehen ist. Zusätzlich kann das Radial-Fanglager - in geringerem Maße - auch zur Aufnahme axialer Kräfte ausgebildet sein. In analoger Weise kann das Axial-Fanglager optional zusätzlich zu axialen Kräften auch für die Aufnahme radialer Kräfte geeignet sein.

Zwischen einem Innenring des Radial-Fanglagers und der magnetgelagerten Welle der Lageranordnung ist vorzugsweise ein erster Spalt gebildet, welcher höchstens 0,1 mm breit ist. Der erste Spalt beschreibt vorzugsweise einen Zylindermantel oder einen Abschnitt eines Kegelmantels.

Zwischen einem Lagerteil des Axial-Fanglagers und der magnetgelagerten Welle der Lageranordnung ist vorzugsweise ein zweiter Spalt gebildet, welcher höchstens 0,1 mm breit ist. Die Gleitflächen des Axial-Fanglagers sind beispielsweise konisch ausgebildet.

Nachfolgend wird ein Ausführungsbeispiel der Erfindung anhand einer Zeichnung näher erläutert. Hierin zeigt schematisch:

### Kurze Beschreibung der Zeichnung

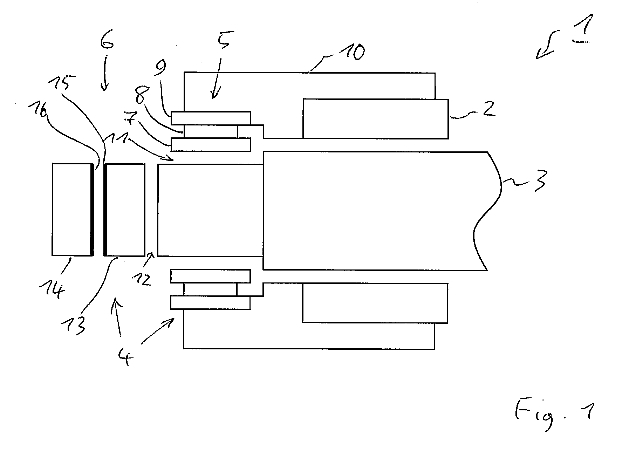

- Fig. 1: eine Lageranordnung mit einem aus Wälz- und Gleitlager gebildeten Fanglager.

### Ausführliche Beschreibung der Zeichnung

Eine insgesamt mit dem Bezugszeichen 1 gekennzeichnete Lageranordnung weist ein Magnetlager 2 zur Lagerung einer Welle 3 auf. Hinsichtlich der prinzipiellen Funktion einer solchen Magnetlagerung wird auf den eingangs zitierten Stand der Technik verwiesen.

Zusätzlich zum Magnetlager 2 ist ein weiteres Lager, nämlich ein Fanglager 4, zur Lagerung der Welle 3 bei Ausfall des Magnetlagers 2 vorgesehen. Das Fanglager 4 umfasst zwei Komponenten, nämlich ein hauptsächlich zur Aufnahme von Radialkräften vorgesehenes Radial-Fanglager 5 und ein hauptsächlich zur Aufnahme von Axialkräften vorgesehenes Axial-Fanglager 6. Die beiden Komponenten 5,6 des Fanglagers 4 sind nicht notwendigerweise mechanisch unmittelbar miteinander verbunden, können jedoch, abweichend von der vereinfachten Darstellung in Fig. 1, beispielsweise mindestens einen gemeinsamen Lagerring aufweisen.

Während das Radial-Fanglager 5 als Wälzlager, beispielsweise Zylinderrollenlager, ausgebildet ist, handelt es sich bei dem Axial-Fanglager 6 um ein Gleitlager. Das Radial-Fanglager 5 weist einen Innenring 7, eine Anzahl Wälzkörper 8, sowie einen Außenring 9 auf, welcher in einem Maschinengehäuse 10 gehalten ist, das auch der Halterung des Magnetlagers 2 dient.

Zwischen dem Innenring 7 und der Welle 3 ist ein erster Spalt 11 gebildet, welcher schmaler als ein zwischen dem Magnetlager 2 und der Welle 3 gebildeter Spalt ist, so dass bei einem Ausfall des Magnetlagers 2 das Radial-Fanglager 5 in Funktion tritt, wobei die Welle 3 von dem Magnetlager 2 zumindest geringfügig in radialer Richtung beabstandet bleibt. Solange das Magnetlager 2 bestimmungsgemäß funktioniert, rotiert die Welle 3, während beide Lagerringe 7,9 des Radial-Fanglagers 5 nicht rotierend im Maschinengehäuse 10 gehalten sind. Das Radial-Fanglager 5 verursacht somit bei störungsfreiem Betrieb des Magnetlagers 2 keine Reibung.

Ein zweiter, axialer Spalt 12 ist zwischen der Welle 3 und dem Axial-Fanglager 6 gebildet. Auch dieser Spalt 12 ist derart bemessen, dass die Fanglagerung, in diesem Fall Gleitlagerung, im Sinne einer Sicherheitseinrichtung in Funktion tritt, bevor die Welle 3 oder ein mit dieser verbundenes Teil mit dem Maschinengehäuse 10 oder einem mit diesem starr verbundenen Teil kollidiert.

Den Lagerringen 7,9 des Radial-Fanglagers 5 entsprechen funktional zwei Lagerteile 13,14 des Axial-Fanglagers 6. Ebenso wie die Lagerringe 7,9 sind das erste Lagerteil 13 sowie das zweite Lagerteil 14 starr am Maschinengehäuse 10 oder einem sonstigen nicht rotierenden Maschinenteil gehalten, solange das Magnetlager 2 bestimmungsgemäß arbeitet. Erst bei Ausfall oder Fehlfunktion des Magnetlagers 2 kann sich der zwischen der Welle 3 und dem ersten Lagerteil 13 existierende axial Spalt 12 schließen, so dass die Welle 3 das erste Lagerteil 13 mitnimmt, wobei dieses relativ zum zweiten Lageteil 14 gleitgelagert ist. Zwischen den Lagerteilen 13,14 besteht abweichend von der symbolisierten Darstellung nach Fig. 1 nicht notwendigerweise ein Spalt. Durch die Lagerteile 13,14 gebildete Gleitflächen 15,16 können entweder, wie in Fig. 1 dargestellt, eben oder konisch sein. Da die auf die Welle 3 wirkenden Kräfte in typischen Anwendungsfällen zum großen Teil durch die Gewichtskraft der Welle 3 sowie der an dieser befestigten Maschinenkomponenten bestimmt sind, ist es häufig ausreichend, das Axial-Fanglager 6 auf geringere Belastungen als das Radial-Fanglager 5 auszulegen.

### Bezugszeichenliste

- 1: Lageranordnung
- 2: Magnetlager
- 3: Welle
- 4: Fanglager
- 5: Radial-Fanglager
- 6: Axial-Fanglager
- 7: Innenring
- 8: Wälzkörper
- 9: Außenring
- 10: Maschinengehäuse
- 11: erster (radialer) Spalt
- 12: zweiter (axialer) Spalt
- 13: erstes Lagerteil
- 14: zweites Lagerteil
- 15: Gleitfläche
- 16: Gleitfläche

## Patentansprüche

1. Fanglager (4) einer Lageranordnung (1) mit Magnetlager (2), **gekennzeichnet durch** ein als Wälzlager ausgebildetes Radial-Fanglager (5) und ein als Gleitlager ausgebildetes Axial-Fanglager (6).

2. Fanglager (4) nach Anspruch 1, **dadurch gekennzeichnet, dass** zwischen einem Innenring (7) des Radial-Fanglagers (5) und einer magnetgelagerten Welle (3) der Lageranordnung (1) ein erster Spalt (11) gebildet ist.

3. Fanglager (4) nach Anspruch 1, **dadurch gekennzeichnet, dass** die Breite des ersten Spaltes (11) weniger 0,1 mm beträgt.

4. Fanglager (4) nach einem der Ansprüche 1 bis 3, **dadurch gekennzeichnet, dass** zwischen einem Lagerteil (13) des Axial-Fanglagers (6) und einer magnetgelagerten Welle (3) der Lageranordnung (1) ein zweiter Spalt (12) gebildet ist.

5. Fanglager (4) nach Anspruch 4, **dadurch gekennzeichnet, dass** die Breite des zweiten Spaltes (12) weniger 0,1 mm beträgt.

6. Fanglager (4) nach einem der Ansprüche 1 bis 5, **dadurch gekennzeichnet, dass** Gleitflächen des Axial-Fanglagers (6) konisch ausgebildet sind.
